(19) **Europäisches Patentamt**
**European Patent Office**
**Office européen des brevets**

(11) **EP 2 312 335 B1**

(12) **FASCICULE DE BREVET EUROPEEN**

(45) Date de publication et mention
de la délivrance du brevet:
**27.03.2013 Bulletin 2013/13**

(51) Int Cl.:
*G01S 13/44* (2006.01)          *G01S 13/00* (2006.01)

(21) Numéro de dépôt: **10187210.9**

(22) Date de dépôt: **12.10.2010**

(54) **Radar à grande précision angulaire, notamment pour la fonction de détection et d'évitement d'obstacle**

Radar mit großer Winkelpräzision, insbesondere für die Funktion der Erkennung und Vermeidung von Hindernissen

Radar with high angular precision, in particular for the function for detecting and avoiding obstacles

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2009 FR 0904880**

(43) Date de publication de la demande:
**20.04.2011 Bulletin 2011/16**

(73) Titulaire: **Thales**
**92200 Neuilly Sur Seine (FR)**

(72) Inventeurs:
• **Kemkemian, Stéphane**
**75014 Paris (FR)**
• **Cornic, Pascal**
**29820 Guilers (FR)**
• **Le Bihan, Patrick**
**29870 Lannilis (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A1- 2009 207 071**

• **CHEVALIER F L ET AL: "Coloured transmission for radar active antenna", REE: REVUE GENERALE DE L'ELECTRICITE ET DE L'ELECTRONIQUE, REVUE GENERALE DE L'ELECTRICITE S.A, FR, no. 6, 1 mars 2005 (2005-03-01), pages 48-52, XP001536744, ISSN: 1265-6534**
• **LE CHAVALIER F: "Space-Time Transmission and Coding for Airborne Radars", LEIDA-KEXUE-YU-JISHU = RADAR SCIENCE AND TECHNOLOGY,, vol. 6, no. 6, 1 décembre 2008 (2008-12-01), pages 411-421, XP009130674, ISSN: 1672-2337**
• **JAMESON BERGIN ET AL: "MIMO Phased-Array for SMTI Radar", AEROSPACE CONFERENCE, 2008 IEEE, IEEE, PISCATAWAY, NJ, USA, 1 mars 2008 (2008-03-01), pages 1-7, XP031256286, ISBN: 978-1-4244-1487-1**
• **OHSHIMA S ET AL: "Phase-comparison monopulse radar with switched transmit beams for automotive application", MICROWAVE SYMPOSIUM DIGEST, 1999 IEEE MTT-S INTERNATIONAL ANAHEIM, CA, USA 13-19 JUNE 1999, PISCATAWAY, NJ, USA,IEEE, US LNKD-DOI:10.1109/MWSYM.1999.780235, vol. 4, 13 juin 1999 (1999-06-13), pages 1493-1496, XP010343561, ISBN: 978-0-7803-5135-6**

**Description**

La présente invention concerne un dispositif radar à grande précision angulaire. Elle s'applique notamment pour la fonction de détection et d'évitement d'obstacle encore appelée « Sense & Avoid ».

La réalisation d'une fonction radar de détection d'obstacles aériens non coopérative pour aéronefs, en particulier pour des drones, est essentielle pour permettre l'insertion d'aéronefs autopilotés dans le domaine aérien non ségrégué. Elle participe à la fonction de détection et d'évitement d'obstacles connue sous le nom de « Sense and Avoid ».

Le domaine d'application de l'invention est notamment celui des radars de courte et moyenne portée, ne nécessitant pas une grande surface d'antenne, mais nécessitant une très bonne précision angulaire. Ceci est le cas en particulier des radars destinés à la fonction « Sense & Avoid ».

La portée d'un radar est proportionnelle, notamment, à la surface de son antenne en réception. Cela se vérifie quel que soit le mode d'exploitation de l'espace, ce mode d'exploitation de l'espace pouvant être à balayage mécanique, à balayage électronique séquentiel ou encore à formation de faisceau par le calcul FFC, à condition cependant qu'on puisse échanger du gain spatial à l'émission contre du gain cohérent selon le temps en réception. Par ailleurs, la précision angulaire d'un radar est proportionnelle, en première approche, au rapport $\lambda/H$ où $\lambda$ est la longueur d'onde et H est la longueur de l'antenne dans le plan dans lequel on cherche à réaliser la mesure angulaire. Une grande précision peut nécessiter une grande longueur H. Cependant un problème réside notamment dans le fait que cette longueur peut s'avérer inutile du point de vue de la portée si l'antenne est non lacunaire.

Le raisonnement précédent appliqué pour une dimension s'étend facilement à deux dimensions, selon deux axes, par exemple l'azimut et l'élévation.

Actuellement ce problème est notamment résolu par une mesure angulaire très précise, mais très fortement ambigüe est obtenue avec un interféromètre en réception, comportant deux antennes, dont l'écartement entre les centres de phase est important.

Pour lever les ambiguïtés, une technique connue consiste à utiliser un interféromètre à plusieurs antennes dont les centres de phase sont irrégulièrement espacés. Dans ce cas, au moins trois antennes sont nécessaires.

Cependant, on est rapidement conduit à une réalisation complexe et de taille importante si on veut que la levée des ambiguïtés angulaire soit fiable.

Un document de F.Le Chevalier et al : « Coloured transmission for radar active antenna » REE : REVUE GENERALE DE L'ELECTRICITE ET DE L'ELECTRONIQUE, REVUE GENERALE DE L'ELECTRICITE S.A, FR, no. 6, 1 mars 2005, pages 48-52, décrit les principes de l'émission colorée, utilisant un codage spatio-temporel.

Un but de l'invention est notamment de pallier les inconvénients précités. A cet effet l'invention a pour objet un dispositif radar tel que décrit par la revendication 1.

Dans un mode de réalisation particulier, les antennes de réception sont par exemple espacée et l'antenne d'émission est divisée en deux antennes, chacune étant alimentée par un code, les codes étant orthogonaux entre eux.

Ainsi, la solution apportée par l'invention associe simultanément :

- un interféromètre précis mais par exemple ambigu à la réception ;
- un mode de coloration de l'espace à l'émission.

La coloration de l'espace consiste notamment à émettre sur N antennes d'émission N signaux orthogonaux. Ces signaux sont ensuite séparés par filtrage à la réception à l'aide des propriétés d'orthogonalité des signaux d'émission.

Il est par exemple possible, avec deux antennes contigües en émission associées à deux codes orthogonaux de réaliser un système de type monopulse à l'émission.

D'autres caractéristiques et avantages de l'invention apparaîtront à l'aide de la description qui suit faite en regard de dessins annexés qui représentent :

- la figure 1, une illustration du principe de fonctionnement d'un radar selon l'invention ;
- la figure 2, par un synoptique, un exemple de réalisation de système d'émission et de réception d'un radar selon l'invention.

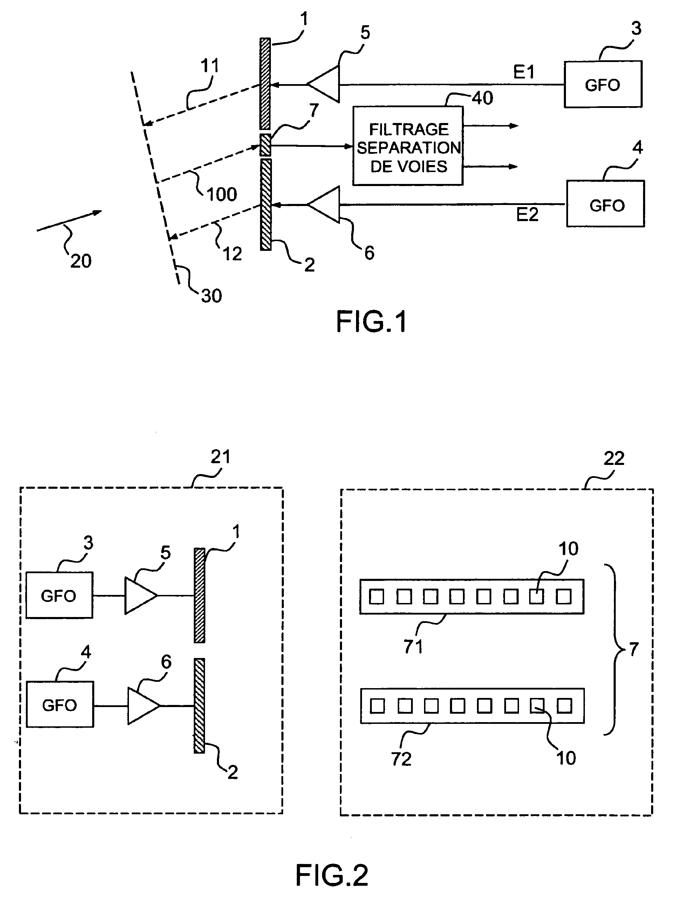

La figure 1 illustre le principe de fonctionnement d'un radar selon l'invention, en émission et en réception par un exemple de mise en oeuvre.

L'invention associe notamment :

- un interféromètre précis mais ambigu à la réception, l'antenne de réception de cet interféromètre constituant l'antenne de réception du radar ;
- un mode de coloration de l'espace à l'émission.

La coloration de l'espace consiste à émettre sur N antennes d'émission N signaux orthogonaux. Ces signaux sont ensuite séparés par filtrage 40 à la réception à partir de leurs propriétés d'orthogonalité.

La figure 1 illustre un exemple de réalisation où N = 2. Le système d'émission comporte deux antennes d'émission contigües 1, 2 associées chacune à un code, l'ensemble de ces deux antennes formant une antenne d'émission. La première antenne 1 est ainsi associée à un premier code E1 et la deuxième antenne est ainsi associée à un deuxième code E2, les deux codes étant orthogonaux entre eux. Il est alors possible de réaliser un système monopulse à l'émission.

Un premier générateur de forme d'onde 3 fournit un signal d'émission émis selon le code E1, ce signal est ensuite amplifié par un amplificateur de puissance 5 avant d'être délivré à la première antenne 1. Un deuxième générateur de forme d'onde 4 fournit un signal d'émission émis selon le code E2, ce signal est ensuite amplifié par un amplificateur de puissance 6 avant d'être délivré à la deuxième antenne 2. Les fonctions de codage sont par exemple intégrées dans les générateurs de forme d'onde 3, 4.

Les signaux d'émission 11, 12 sont émis par chaque moitié 1, 2 de l'antenne d'émission. La figure 1 illustre la progression d'une onde émise dans une direction donnée 20 selon la progression du plan de phase 30.

Un signal de réception 100 est par exemple reçu dans cette direction 20. Ce signal est reçu par une antenne de réception 7.

La figure 2 présente par un schéma synoptique la partie émission 21 et la partie réception 22 du système d'émission et de réception d'un radar selon l'invention. La partie émission comporte les générateurs de formes d'onde 3, 4 et les amplificateurs 5, 6 associés à chaque antenne 1, 2 telles que décrites relativement à la figure 1. La partie réception comporte deux réseaux linéaires 71, 72 d'éléments rayonnant 10 formant l'antenne de réception 7. L'ensemble des sous-réseaux 71, 72 est relié des voies de réception non représentées dont la réalisation est connue par ailleurs par l'intermédiaire de moyens de filtrage.

Les deux sous-réseaux 71, 72 sont donc reliés en sortie aux moyens de filtrage 40. Plus particulièrement, les moyens de filtrage sont composés de deux voies de filtrage, une première voie étant affectée à la première antenne 71 et la deuxième voie étant affectée à la deuxième antenne 72. Les moyens de filtrage 40 effectuent une séparation des signaux de réception en utilisant les propriétés d'orthogonalité des signaux d'émission E1, E2. Cette propriété d'orthogonalité permet de discriminer la partie d'un signal de réception R1 associée au signal d'émission E1 et la partie de réception R2 associée au signal d'émission E2. En sortie des moyens de filtrage, le signal de réception R1 est délivré à une première voie de réception, appelée R1 par la suite, et le signal de réception R2 est délivré à une deuxième voie de réception, appelée R2 par la suite.

Les signaux de réception reçus de l'antenne de réception 7 peuvent être numérisés avant ou après les moyens de filtrage 40 selon le mode de réalisation de ces derniers. S'ils sont réalisés en technologie numérique, les convertisseurs analogique-numériques sont situés avant les moyens de filtrage.

Grâce à l'émission de deux codes orthogonaux E1 et E2 sur les deux moitiés 1, 2 de l'antenne d'émission, les signaux reçus d'une cible dans une direction donnée 10, après séparation des voies R1 et R2, sont équivalents à ceux qu'aurait reçu, de la même cible, la même antenne 1, 2, mais fonctionnant en réception. Le signal R1 correspondant au signal d'émission E1 et le signal R2 correspondant au signal d'émission E2. On a donc réalisé, grâce aux émissions séparées de deux codes orthogonaux, un système monopulse de phase à l'émission. En d'autres termes, on utilise deux antennes à l'émission émettant les signaux E1 et E2 pour faire une mesure angulaire réalisable avec une unique antenne en réception, cette mesure étant effectuée par application aux signaux R1 et R2 du principe de mesure monopulse.

Avantageusement ce système monopulse à l'émission est de petite taille. En effet, l'antenne d'émission composée des deux antennes 1, 2 peut être de très faible dimension. Ce système monopulse à l'émission est peu précis en direction. En revanche, il est peu, voire pas ambigu en direction.

En d'autres termes, le système de coloration de l'espace à l'émission associé à un dispositif antennaire à l'émission, notamment de petite taille, permet de mesurer après réception et filtrage sur chacune des antennes de réception 71, 72, une direction d'arrivée peu précise mais non ambiguë. Une première mesure de l'angle d'arrivée est ainsi obtenue avec une précision donnée en direction et un niveau d'ambigüité donné.

Les deux antennes de réception 71, 72 fournissent une mesure de phase, donc d'angle d'arrivée $\theta$ d'un écho de cible, très précise mais potentiellement ambigüe.

L'interférométrie ambigüe en réception permet de mesurer précisément la direction d'arrivée du signal cible à un rang d'ambigüité k près, en cosinus directeur. En particulier, la mesure $\theta_{MESURE}$ de l'angle d'arrivée est donnée par la relation suivante :

$$\theta_{MESURE} = \theta_{REEL} + S_{BRUIT} + k.\Delta\theta \qquad (1)$$

$\theta_{REEL}$ étant l'angle d'arrivée réel de la cible sur l'antenne de réception, $S_{BRUIT}$ étant le signal de bruit et $\Delta\theta$

étant la largeur angulaire correspondant à une ambigüité. Cette largeur angulaire est fonction de l'écartement entre les centres de phase de l'interféromètre. Elle est parfaitement connue.

Une deuxième mesure de l'angle d'arrivée est ainsi obtenue avec une précision donnée en direction et un niveau d'ambigüité donné.

La mesure de l'angle d'arrivée d'un écho de cible retenue retient la précision de cette deuxième mesure et le niveau d'ambigüité de la première mesure. On obtient ainsi une mesure précise en direction avec une faible ambigüité, ou même une ambigüité nulle.

Le principe de réalisation précédent est décrit dans un plan, mais il peut bien sûr être généralisé à deux plans de l'espace, par exemple dans le plan d'élévation et dans le plan d'azimut.

De même, il est possible d'utiliser une configuration de coloration à l'émission qui procure une mesure ambigüe, cela pouvant être par exemple la conséquence de contraintes d'implantation des antennes d'émission. Dans ce cas, la mesure $\theta'_{MESURE}$ obtenue grâce à l'émission est par exemple du type :

$$\theta'_{MESURE} = \theta_{REEL} + S'_{BRUIT} + k'\Delta\theta' \qquad\qquad (2)$$

$S'_{BRUIT}$ étant le signal de bruit et $\Delta\theta'$ étant la largeur angulaire correspondant à une ambigüité.

Pour que la levée d'ambigüité soit possible, les paramètres d'émission sont paramétrés de telle sorte que le rapport $\dfrac{\Delta\theta'}{\Delta\theta}$ soit proche d'un rapport $\dfrac{q'}{q}$ où $q$ et $q'$ sont des nombre premiers entre eux.

**Revendications**

1.  Dispositif radar comportant:

    - en émission (21), un système d'émission colorée comportant au moins deux antennes contigües (1, 2, 3, 4, 5, 6), la première antenne émettant un premier code (E1) et la deuxième antenne émettant un deuxième code (E2), les deux codes étant orthogonaux entre eux ;

    **caractérisé en ce qu'**il comporte au moins :

    - des moyens de filtrage (40) séparant les signaux reçus en deux signaux R1 et R2, le signal R1 correspondant au premier code (E1) et le signal R2 correspondant au deuxième code (E2), une première mesure d'angle d'arrivée de l'écho de cible étant obtenue par application aux deux signaux R1 et R2 du principe de mesure monopulse en phase, ladite première mesure ayant une précision de mesure et un niveau d'ambigüité ;
    - en réception (22), un interféromètre comportant au moins deux antennes de réception (71, 72), fournissant une mesure de phase donc une deuxième mesure d'angle d'arrivée d'un écho de cible, ladite deuxième mesure ayant une précision de direction et un niveau d'ambigüité ;

    la mesure retenue pour un angle d'arrivée d'un écho de cible ayant la précision en direction de la deuxième mesure et le niveau d'ambigüité angulaire de la première mesure.

2.  Dispositif radar selon la revendication 1, **caractérisé en ce que** les antennes de réception (71, 72) sont espacée et l'antenne d'émission est divisée en deux antennes (1, 2), chacune étant alimentée par un code (E1, E2), les codes étant orthogonaux entre eux.

3.  Dispositif radar selon l'une quelconque des revendications 1 ou 2, **caractérisé en ce que** le système d'émission colorée délivrant une mesure ambigüe, son pas d'ambigüité $\Delta\theta'$ vis-à-vis du pas d'ambigüité de l'interféromètre $\Delta\theta$ est choisi de manière à ce que la combinaison de la première mesure et de la deuxième mesure lève les rangs d'ambigüité des mesures.

4.  Dispositif radar selon la revendication 3, **caractérisé en ce que** le rapport des pas d'ambigüité $\dfrac{\Delta\theta'}{\Delta\theta}$ est choisi

proche d'un rapport $\dfrac{q'}{q}$ où $q$ et $q$' sont des nombre premiers entre eux.

5. Dispositif radar selon l'une quelconque des revendications précédentes, **caractérisé en ce que** les mesures sont effectuées dans le plan d'élévation et dans le plan d'azimut.

**Claims**

1. Radar device comprising in transmission (21), a coloured transmission system comprising at least two contiguous antennas (1, 2, 3, 4, 5, 6), the first antenna transmitting a first code (E1) and the second antenna transmitting a second code (E2), the two codes being mutually orthogonal;
**characterized in that** it comprises at least:

   - filtering means (40) separating the received signals into two signals R1 and R2, the signal R1 corresponding to the first code (E1) and the signal R2 corresponding to the second code (E2), a first measurement of the angle of arrival of the target echo being obtained by applying the single-pulse measurement principle in phase to the two signals R1 and R2, said first measurement having a measurement accuracy and an ambiguity level;
   - in reception (22), an interferometer comprising at least two receiving antennas (71, 72), supplying a phase measurement and therefore a second measurement of the angle of arrival of a target echo, said second measurement having a direction accuracy and an ambiguity level;

   the measurement retained for an angle of arrival of a target echo having the direction accuracy of the second measurement and the angular ambiguity level of the first measurement.

2. Radar device according to Claim 1, **characterized in that** the receiving antennas (71, 72) are spaced apart and the transmitting antenna is divided into two antennas (1, 2), each being fed by a code (E1, E2), the codes being mutually orthogonal.

3. Radar device according to any one of claims 1 or 2, **characterized in that**, since the coloured transmission system delivers an ambiguous measurement, its ambiguity pitch $\Delta\theta$' with regard to the ambiguity pitch of the interferometer $\Delta\theta$ is chosen so that the combination of the first measurement and the second measurement eliminates the ambiguity ranks from the measurements.

4. Radar device according to Claim 3, **characterized in that** the ratio of the ambiguity pitches $\dfrac{\Delta\theta'}{\Delta\theta}$ is chosen to be close to a ratio $\dfrac{q'}{q}$ in which q and q' are prime numbers.

5. Radar device according to any one of the preceding claims, **characterized in that** the measurements are made in the elevation plane and in the azimuth plane.

**Patentansprüche**

1. Radarvorrichtung, die Folgendes umfasst:

   - auf der Sendeseite (21) ein farbiges Sendesystem, das wenigstens zwei nebeneinander liegende Antennen (1, 2, 3, 4, 5, 6) umfasst, wobei die erste Antenne einen ersten Code (E1) und die zweite Antenne einen zweiten Code (E2) sendet, wobei die beiden Codes orthogonal zueinander sind;

   **dadurch gekennzeichnet, dass** sie wenigstens Folgendes umfasst:

   - Filtrationsmittel (40), die die empfangenen Signale in zwei Signale R1 und R2 aufteilen, wobei das Signal R1 dem ersten Code (E1) und das Signal R2 dem zweiten Code (E2) entspricht, wobei ein erster Ankunftswinkelmesswert des Zielechos durch Anwenden des Phasen-Monopuls-Messprinzips auf die beiden Signale R1 und R2 erhalten wird, wobei der erste Messwert eine Messpräzision und ein Ambiguitätsniveau hat;
- auf der Empfangsseite (22) ein Interferometer mit wenigstens zwei Empfangsantennen (71, 72), das einen Phasenmesswert und somit einen zweiten Ankunftswinkelmesswert eines Zielechos liefert, wobei der zweite Messwert eine Richtungspräzision und ein Ambiguitätsniveau hat;

wobei der für einen Ankunftswinkel eines Zielechos benutzte Messwert die Richtungspräzision des zweiten Messwerts und das winkelmäßige Ambiguitätsniveau des ersten Messwerts hat.

2. Radarvorrichtung nach Anspruch 1, **dadurch gekennzeichnet, dass** die Empfangsantennen (71, 72) beabstandet sind und die Sendeantenne in zwei Antennen (1, 2) unterteilt ist, die jeweils mit einem Code (E1, E2) gespeist werden, wobei die Codes orthogonal zueinander sind.

3. Radarvorrichtung nach Anspruch 1 oder 2, **dadurch gekennzeichnet, dass** das farbige Sendesystem einen uneindeutigen Messwert liefert, dessen Ambiguitätsstufe $\Delta\theta'$ gegenüber der Ambiguitätsstufe des Interferometers $\Delta\theta$ so gewählt wird, dass die Kombination aus dem ersten Messwert und dem zweiten Messwert die Ambiguitätsränge der Messwerte aufhebt.

4. Radarvorrichtung nach Anspruch 3, **dadurch gekennzeichnet, dass** das Verhältnis der Ambiguitätsstufen $\frac{\Delta\theta'}{\Delta\theta}$

nahe an einem Verhältnis $\frac{q'}{q}$ gewählt wird, wobei $q$ und $q'$ Primzahlen untereinander sind.

5. Radarvorrichtung nach einem der vorherigen Ansprüche, **dadurch gekennzeichnet, dass** die Messungen in der Höhenebene und in der Azimutebene erfolgen.

**FIG.1**

**FIG.2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **F.LE CHEVALIER et al.** Coloured transmission for radar active antenna. *REE : REVUE GENERALE DE L'ELECTRICITE ET DE L'ELECTRONIQUE, REVUE GENERALE DE L'ELECTRICITE S.A, FR,* 01 Mars 2005, 48-52